# EUROPÄISCHE PATENTANMELDUNG

(11) **EP 1 258 703 A2**
(43) Veröffentlichungstag der Anmeldung: **20.11.2002**
(21) Anmeldenummer: 02008634.4
(22) Anmeldetag: 17.04.2002
(51) Int. Cl.: G01C 15/00

(54) **Verfahren und Vorrichtung zum Sichtbarmachen einer Laserstrahlposition**

(30) Priorität: 16.05.2001 DE 10123756
(71) Anmelder: ROBERT BOSCH GMBH, 70442 Stuttgart (DE)
(72) Erfinder: Pidoux, Raymond, 1313 Ferreyres (CH)

(57) **Zusammenfassung**

Die Erfindung bezieht sich auf ein Verfahren und eine Vorrichtung zum Sichtbarmachen einer Laserstrahlposition, insbesondere bei hellem Umgebungslicht. Das Verfahren umfaßt folgende Schritte:
A) Detektieren des Laserstrahls mit Photodioden (1, 2, 28),
B) Konvertieren des Wechselstrom-Anteils der Photodioden (1, 2, 28) in Spannungen,
C) Unterdrücken von Untergrund durch Komparatoren (7, 8),
D) Speichern der durch den Laserstrahl erzeugten Signalpositionen in Speicherelementen,
E) Anzeigen der in den Speicherelementen gespeicherten Signalpositionen durch Leuchtdioden (13, 14, 29),
F) Nullsetzen der Speicherelemente und
G) Wiederholen der Verfahrensschritte ab Schritt A).

Die Vorrichtung enthält einen Detektor zum Detektieren von Laserstrahlen und ein Anzeigeelement. Der Detektor umfaßt Photodioden (1, 2), deren Wechselstrom-Anteil durch Strom-Spannungswandler (5, 6) in Spannungen konvertiert werden. Komparatoren (7, 8) unterdrücken Untergrundsignale und Speicherelemente speichern die Lasersignale. Das Anzeigeelement umfaßt Leuchtdioden (13, 14) zum Anzeigen der Positionen der in den Speicherelementen gespeicherten Signale.

## Beschreibung

### Technisches Gebiet

In der Bauindustrie, im Elektro- und Installationshandwerk kommen häufig Baulaser zum Einsatz. Sie dienen als Hilfsmittel für Ausmess-, Positionier- und Markiervorgänge. Mit Hilfe von Baulasern können auf Wänden, Decken und Böden horizontale und vertikale Linien festgelegt oder im Raum horizontal oder vertikal verlaufende Ebenen exakt definiert werden. Die gewünschte Position z.B. eines Befestigungspunktes kann mittels eines gebündelten Laserstrahls auf eine Fläche projiziert werden. Linien können auf die in einem Abstand vom Laser befindliche Fläche projiziert werden, indem der Laserstrahl periodisch rotiert oder abgelenkt wird. Die Linien sind beispielsweise als Begrenzungen von gekachelten Flächen, für die Bestimmung eines exakt horizontalen Verlaufs von Leitungen oder für das Ausrichten der Ausbrüche für Türen und Fenster erforderlich. Der Laserstrahl hinterläßt keine bleibende Markierung auf der jeweiligen Fläche. Eine bleibende Markierung muß manuell (z.B. mit Kreide) oder automatisch mit einem Markierwerkzeug an der Fläche angebracht werden. Oft reicht die Laserstrahlleistung bei hellen Lichtverhältnissen und großen Entfernungen nicht aus, um den projizierten Punkt bzw. die projizierte Linie auf der zu markierenden Fläche sichtbar zu machen. Es sind jedoch Hilfsgeräte bekannt, die den Laserstrahl mittels lichtelektrischen Detektoren registrieren. Die Detektoren sind dabei mit einer Positionierhilfe verbunden. Die Positionierhilfe teilt dem Anwender mit, in welche Richtung er das Hilfsgerät bewegen muß, um seine Mittenposition exakt mit dem projizierten Punkt in Übereinstimmung zu bringen.

### Stand der Technik

DE 197 57 461 A1 betrifft einen Baulaser mit einer innerhalb eines Gerätegehäuses angeordneten Laserlichtquelle für die Erzeugung von sichtbarer Laserstrahlung, die um eine Drehachse rotierbar ist. Des weiteren umfaßt der Baulaser eine Stellglieder aufweisende Nivelliereinrichtung für die Ausrichtung der Drehachse der Laserstrahlung in Abhängigkeit von einer von Neigungssensoren erfaßten Lage der Drehachse.

DE 196 34 800 A1 bezieht sich auf eine Vorrichtung zum Anbringen von Markierungen an Flächen, insbesondere an Wänden und Decken, beispielsweise im Bauwesen oder in der Haustechnik. Die Vorrichtung enthält eine lichtelektrische Detektoranordnung zum Detektieren von gebündelten Lichtsignalen einer im Abstand von der Fläche angeordneten Lichtquelle, vorzugsweise eines Lasers. Ferner enthält sie eine signalerzeugende Positionierhilfe, die mit der Detektoranordnung zusammenwirkt, um dem Anwender ein Positionieren der Vorrichtung an der Fläche nach Maßgabe der detektierten Lichtsignale zu ermöglichen. Die Vorrichtung umfaßt außerdem eine Markiereinrichtung, mittels der bei korrekter Positionierung der Vorrichtung eine Markierung an der Fläche anbringbar ist.

DE 199 02 075 A1 bezieht sich auf ein Markierwerkzeug zum Anbringen von Markierungen an Oberflächen, insbesondere von Positionsmarkierungen an zu bearbeitenden Wänden oder Decken von Gebäuden. Das Markierwerkzeug enthält ein Mittel zum Anbringen einer Markierung an einer Oberfläche, wobei das Mittel mit einem lichtempfindlichen Element zu einer Einheit verbunden ist. Ferner umfaßt das Markierwerkzeug eine Steuereinrichtung, die mit dem lichtempfindlichen Element und dem Mittel zum Anbringen einer Markierung in funktioneller Beziehung steht, um letzteres zu betätigen, wenn das lichtempfindliche Element einen Lichtstrahl erfasst. Das Mittel zum Anbringen einer Markierung umfasst vorzugsweise eine Schreibspitze, die durch eine Düse zum Abgeben von Farbpulver oder Tinte gebildet ist.

### Darstellung der Erfindung

Die vorliegende Erfindung offenbart ein Verfahren zum Sichtbarmachen einer Laserstrahlposition, insbesondere bei hellem Umgebungslicht mit folgenden Schritten:
A) Detektieren des Laserstrahls mit Photodioden,
B) Konvertieren des Wechselstrom-Anteils der Photodioden in Spannungen,
C) Unterdrücken von Untergrund durch Komparatoren,
D) Speichern der durch den Laserstrahl erzeugten Signalpositionen in Speicherelementen,
E) Anzeigen der in den Speicherelementen gespeicherten Signalpositionen durch Leuchtdioden,
F) Nullsetzen der Speicherelemente und
G) Wiederholen der Verfallrensschritte ab Schritt A).

Vorteilhaft ist dabei, daß ein durch einen Laserstrahl projizierter Punkt oder eine projizierte Linie durch das erfindungsgemäße Verfahren sichtbar gemacht werden, insbesondere bei geringer Laserleistung, hellen Lichtverhältnissen und großer Entfernung des Lasers. Die entstehenden Untergrundsignale werden mittels Komparatoren "herausgefiltert", so daß nur diejenigen Signale in den Speicherelementen gespeichert und durch die Leuchtdioden angezeigt werden, die der Laserstrahl verursacht.

In einer bevorzugten Ausführungsform der vorliegenden Erfindung ist je eine Leuchtdiode einer Photodiode zugeordnet. Bevorzugt befindet sich die jeweils einer Photodiode zugeordnete Leuchtdiode direkt neben der Photodiode. Diese Anordnung von Photodioden und Leuchtdioden hat den Vorteil, daß eine "Kopie" des einfallenden Laserstrahls durch die Leuchtdioden wiedergegeben wird. Im Gegensatz zu den im Stande der Technik üblichen Detektoren, die man deplacieren muß, um den Strahl zu orten, wird bei dem erfindungsgemäßen verfahren die Position und die Form des einfallenden Strahls aktiv zurückgestrahlt. Es ist demnach unnötig, die Mittenposition des Detektors zu treffen.

Das Konvertieren des Stroms der Photodioden in Spannungen kann vorzugsweise mittels nur eines Strom-Spannungswandlers erfolgen, nachdem ein Multiplexverfahren durchgeführt wurde. Mit einem Multiplexer kann eine Leitung für mehrere Übertragungen eingesetzt werden. Beim Multiplexen "verdichtet" man mehrere Datenkanäle auf einen. Bei der vorliegenden Erfindung wird vorzugsweise durch ein Zeit-Multiplexverfahren eine Leitung zur Übertragung der Signale aller Photodioden eingesetzt. Beim Zeitmultiplexen wird die verfügbare Zeitspanne in Zeitschlitze aufgeteilt, d.h. die gesamte Zeitspanne wird abwechslungsweise an alle Clients für kurze Zeit übergeben. Die Clients sind in diesem Zusammenhang die Photodioden. Die Durchführung eines Multiplexverfahrens als ein Schritt des erfindungsgemäßen Verfahrens ist insbesondere dann vorteilhaft, wenn die Ströme einer großen Anzahl von Photodioden in Spannungen konvertiert und über Komparatoren an die Speicherelemente weitergeleitet werden müssen. Aufgrund des Multiplexings benötigt man nur einen Strom-Spannungswandler und einen Komparator für alle Photodiodensignale. Dies bedeutet einen Kosten- und Platzvorteil.

In einer bevorzugten Ausführungsform der vorliegenden Erfindung handelt es sich bei dem Laserstrahl um sichtbares Licht oder um Infrarotstrahlung. Vorteilhaft ist dabei, daß mittels der vorliegenden Erfindung auch das für das menschliche Auge nicht sichtbare infrarote Licht sichtbar gemacht werden kann.

Ferner betrifft die vorliegende Erfindung eine Vorrichtung zum Sichtbarmachen einer Laserstrahlposition, insbesondere bei hellem Umgebungslicht, die einen Detektor zum Detektieren von Laserstrahlen und ein Anzeigeelement zum Sichtbarmachen der Laserstrahlposition enthält. Der Detektor umfaßt dabei Photodioden, deren Wechselstromanteil durch Strom-Spannungswandler in Spannungen konvertiert werden. Ferner unterdrücken Komparatoren Untergrundsignale und Speicherelemente speichern die Lasersignale. Das Anzeigeelement umfaßt Leuchtdioden zum Anzeigen der Positionen der in den Speicherelementen gespeicherten Signale und dient dazu, die Laserstrahlposition anzuzeigen.

Die erfindungsgemäße Vorrichtung bietet den Vorteil, daß ein durch einen Laserstrahl projizierter Punkt oder eine projizierte Linie sichtbar gemacht werden, insbesondere bei geringer Laserleistung, bei hellen Lichtverhältnissen und bei großer Entfernung des Lasers. Untergrundsignale werden mittels Komparatoren unterdrückt, so daß nur die durch den Laserstrahl verursachten Signale in den Speicherelementen gespeichert und durch die Leuchtdioden angezeigt werden.

Ferner betrifft die vorliegende Erfindung die Verwendung der erfindungsgemäßen Vorrichtung zum Sichtbarmachen des Laserstrahls eines Baulasers. Auf Baustellen werden Baulaser meist bei hellen Lichtverhältnissen eingesetzt. Aus sicherheitstechnischen Gründen haben Baulaser jedoch nur eine geringe Leistung. Zum Sichtbarmachen des Laserstrahls bietet sich deshalb die Verwendung der erfindungsgemäßen Vorrichtung an.

Für die erfindungsgemäße Verwendung ist die Vorrichtung vorzugsweise Bestandteil eines Markierwerkzeugs. Unter einem Markierwerkzeug ist in diesem Zusammenhang eine Vorrichtung zu verstehen, die dazu dient, an zu markierenden Flächen wie beispielsweise den Wänden, der Decke oder dem Fußboden eines Gebäudes, Markierungen anzubringen, deren Position durch den Laserstrahl eines Baulasers vorgegeben wird.

In einer bevorzugten Verwendungsform steuert die erfindungsgemäße Vorrichtung den Schreibkopf eines Markierwerkzeugs an, so daß genau an der Laserstrahlposition eine Markierung auf einer unter dem Schreibkopf befindlichen Fläche angebracht wird. Beispielsweise kann der Schreibkopf, ähnlich wie bei einem Plotter, automatisch in x- und y-Richtung verfahren werden. Dadurch kann der Schreibkopf auf der der zu markierenden Fläche zugewandten Seite des Markierwerkzeugs so positioniert werden, daß er die Verlängerung eines auf die der Fläche abgewandten Seite auftreffenden Laserstrahls bildet. Anschließend kann der Schreibkopf zum Beispiel Tinte oder ein farbiges Pulver auf die zu markierende Fläche sprühen, um an der Stelle der projizierten Marke eine Farbmarkierung anzubringen.

### Zeichnung

Anhand der Zeichnung wird die Erfindung nachstehend näher erläutert.

### Es zeigt:

- Figur 1: den schematischen Aufbau einer erfindungsgemäßen Vorrichtung, bei der je einer Photodiode ein Strom-Spannungswandler und ein Komparator zugeordnet sind;
- Figur 2: den schematischen Aufbau einer erfindungsgemäßen Vorrichtung mit einer Multiplexanordnung und
- Figur 3: mögliche Anordnungen von Photo- und Leuchtdioden.

### Ausführungsvarianten

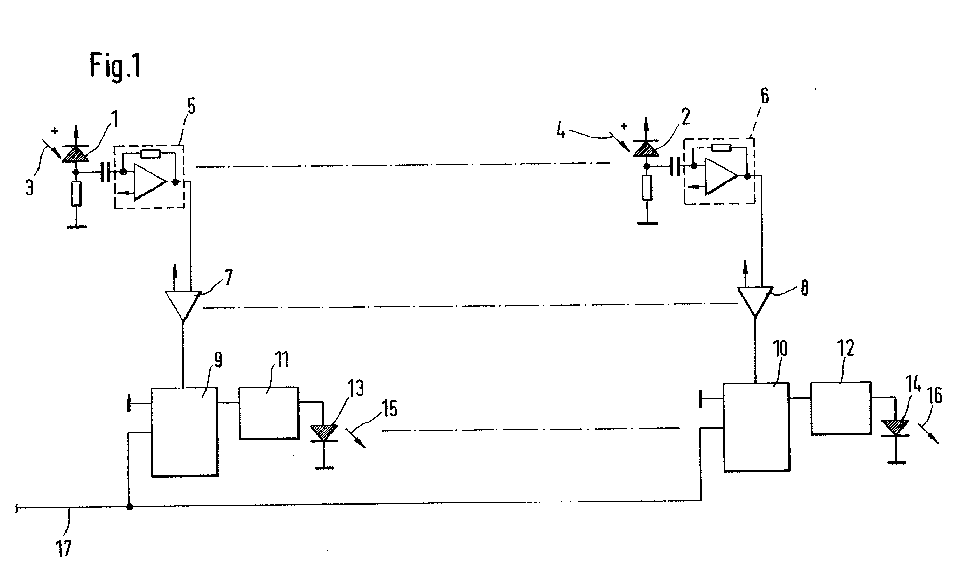

Figur 1 zeigt den Aufbau einer erfindungsgemäßen Vorrichtung, bei der je einer Photodiode ein Strom-Spannungswandler und ein Komparator zugeordnet sind.

Es sind die erste und die N-te Photodiode (Bezugszeichen 1 und 2) von N-Photodioden dargestellt. Durch die Strichpunktlinien zwischen der ersten Photodiode 1 und der N-ten Photodiode 2 soll angedeutet werden, daß sich dort noch eine oder mehrere Photodioden zusätzlich zu den dargestellten Photodioden 1, 2 befinden können. N kann für eine beliebige natürliche Zahl stehen, die größer als 1 ist. Die Photodioden 1, 2 sind in Sperrrichtung geschaltet. Bei einfallendem Licht (3 und 4, symbolisiert durch die Pfeile) fließt ein Photodiodenstrom, der proportional zur Intensität des einfallenden Lichts 3, 4 ist. Das einfallende Licht kann dabei Laserlicht und/oder Umgebungslicht sein.

Vorzugsweise erfolgt das Konvertieren des Wechselstrom-Anteils der Photodioden 1, 2 in Spannungen bei dem erfindungsgemäßen Verfahren und bei der erfindungsgemäßen Vorrichtung mittels Strom-Spannungswandlern, wobei je ein Strom-Spannungswandler einer Photodiode zugeordnet ist. Bei dem Ausführungsbeispiel in Figur 1 wird der jeweilige Photodiodenstrom der Photodioden 1,2 mittels je eines Strom-Spannungswandlers 5, 6 in eine Spannung konvertiert. Der Ausgang jedes Strom-Spannungswandlers 5, 6 ist mit einem Komparator 7, 8 verbunden. In dieser bevorzugten Ausgestaltungsform der vorliegenden Erfindung ist je ein Komparator 7, 8 einer Photodiode 1, 2 zugeordnet. Die N Komparatoren 7, 8 dienen dazu, den Signalanteil ,der durch das Laserlicht entsteht, vom Untergrundsignal zu unterscheiden. Der Komparator 7, 8 gibt einen Schwellwert vor, über dem die Signalspannung liegen muß, um als Lasersignal erkannt zu werden.

Da in dieser bevorzugten Ausführungsform je ein Komparator 7, 8 einer Photodiode 1, 2 und einem Strom-Spannungswandler 5, 6 zugeordnet ist und diese durch je eine Leitung verbunden sind, braucht in diesem Fall kein Multiplexverfahren durchgeführt zu werden.

Bei der vorliegenden Erfindung werden bevorzugt Kippschaltungen 9, 10 (Flip-Flops) als Speicherelemente eingesetzt. Diese Kippschaltungen 9, 10 können zwei Zustände einnehmen, den Setzzustand und den Rücksetzzustand. Beispielsweise befindet sich die Kippschaltung 9, 10 bei der vorliegenden Erfindung so lange im Rücksetzzustand (Nullzustand), bis ein Laserstrahl die zugehörige Photodiode 1, 2 trifft und das daraus resultierende Signal ein Umschalten der Kippschaltung 9, 10 in den Setzzustand verursacht. Die Position des einfallenden Laserstrahls wird so gespeichert.

Überschreitet die Eingangsspannung eines Komparators 7, 8 den durch ihn gesetzten Schwellwert, so wird eine zugehörige Kippschaltung 9, 10 vom Rücksetzzustand (Nullzustand) in den Setzzustand geschaltet, wodurch das durch Laserlicht verursachte Signal gespeichert wird. Jede Kippschaltung 9, 10 steuert über eine Schnittstelle 11, 12 den Strom je einer Leuchtdiode 13, 14. Befindet sich eine Kippschaltung 9, 10 im Nullzustand, so fließt kein Strom zu der dazugehörigen Leuchtdiode 13, 14 und die Leuchtdiode 13, 14 leuchtet nicht. Befindet sich eine Kippschaltung 9, 10 im Setzzustand, so fließt ein Strom zu der dazugehörigen Leuchtdiode 13, 14 und sie emittiert Licht 15, 16 (symbolisiert durch Pfeile).

Eine Löschung des Speichers jedes Speicherelements erfolgt regelmäßig durch ein Nullsetzen der Kippschaltung 9, 10, also ein Setzen in den Rücksetzzustand. Alle N Kippschaltungen 9, 10 werden regelmäßig und gleichzeitig durch ein Signal in den Rücksetzzustand geschaltet, wobei das Signal über eine Leitung 17 je einen Eingang der Kippschaltungen 9, 10 erreicht. Dadurch werden die Speicher der Speicherelemente gelöscht.

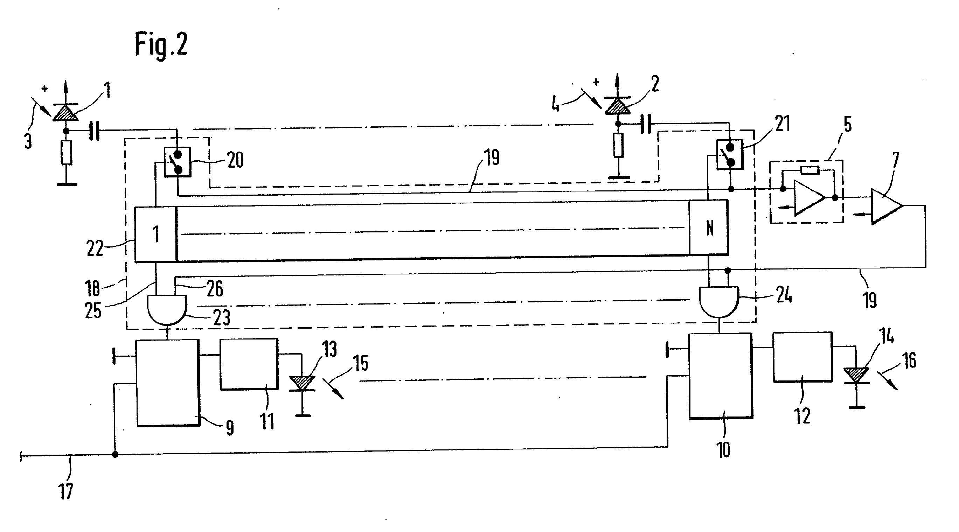

Figur 2 zeigt den Aufbau einer erfindungsgemäßen Vorrichtung mit einer Multiplexanordnung. In einer bevorzugten Ausführungsform der erfindungsgemäßen Vorrichtung umfaßt die Vorrichtung eine Multiplexanordnung, die den Photodioden 1, 2 nachgeordnet ist. Die Multiplexanordnung zum Durchführen eines Multiplexverfahrens kann beispielsweise einen Multiplexer, eine Leitung und einen Demultiplexer umfassen. Die Leitung kann zum Beispiel den Multiplexer mit einem Strom-Spannungswandler 5, 6, einem Komparator 7, 8 und dem Demultiplexer verbinden.

Wie in Figur 1 sind in Figur 2 zwei von N Photodioden 1, 2 dargestellt. Den Photodioden 1,2 ist eine Multiplexanordnung 18 nachgeordnet, die sich in Figur 1 in dem gestrichelten Kasten befindet. Bei der hier dargestellten Technologie handelt es sich um ein Zeitmultiplexverfahren. Eine einzige Signalleitung 19 wird abwechselnd zur Signalübertragung für die N Photodioden 1, 2 freigeschaltet. Dies ist in Figur 2 schematisch durch N Schalter 20, 21 dargestellt. Mit Hilfe eines Strom-Spannungswandlers 5 werden nacheinander alle Wechselstrom-Anteile der Photodioden 1,2, die durch die einzige Signalleitung 19 fließen, in Spannungen konvertiert. Ein Komparator 7 gibt den Schwellwert für alle Photodiodensignale vor und unterdrückt so Untergrundsignale. Anschließend müssen die einzelnen in einer Leitung 19 transportierten Signale wieder getrennt und einer Photodiode 1, 2 zugeordnet werden. Dazu dienen eine Kontrolleinheit 22 mit N Ein- und Ausgängen und N digitale UND-Gatter 23, 24. Eine Kippschaltung 9, 10 wird nur dann in den Setzzustand geschaltet, wenn beide Eingänge des zugehörigen UND-Gatters den Zustand "1" haben. Ein Eingang 25 jedes UND-Gatters ist mit einem Ausgang der Kontrolleinheit 22 verbunden. Dieser Eingang 25 des UND-Gatters 23 hat den Zustand "1", wenn die Kontrolleinheit 22 meldet, daß ein über die Signalleitung 19 an dem zweiten Eingang 26 des UND-Gatters 23 ankommendes Signal derjenigen Photodiode 1 zugeordnet werden kann, die zu diesem UND-Gatter 23 gehört. Der zweite Eingang 26 des UND-Gatters hat den Zustand "1", wenn ein über die Leitung 19 geleitetes Signal nicht von dem Komparator 7 unterdrückt wurde und somit als Lasersignal interpretiert wird. Beide Eingänge 25, 26 eines UND-Gatters haben demnach den Zustand "1", wenn ein Signal der zugehörigen Photodiode 1 zugeordnet wird und das Signal nicht durch den Komparator 7 unterdrückt wird. Der Rest der in Figur 2 dargestellten Schaltung gleicht der Schaltung in Figur 1 (Kippschaltungen 9, 10, Schnittstellen 11, 12, Leuchtdioden 13, 14, Leitung für das Rücksetzsignal 17).

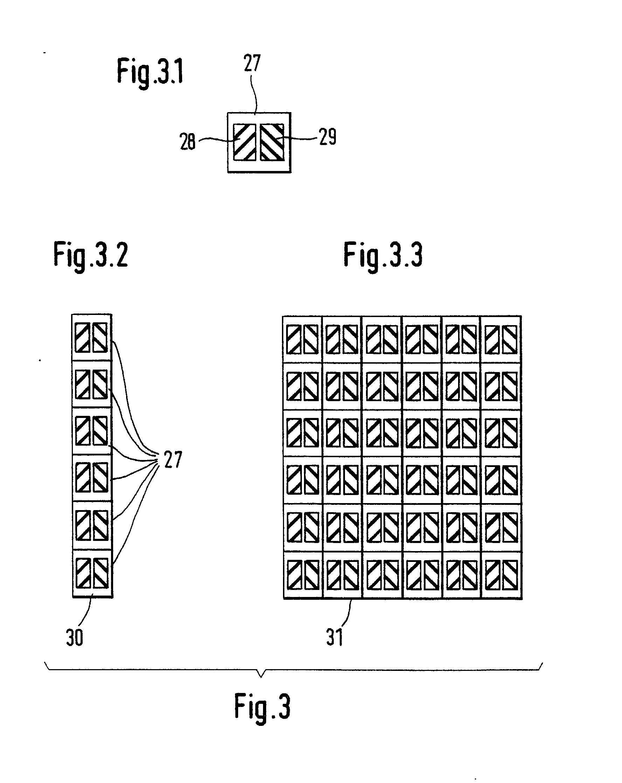

Figur 3 zeigt mögliche Anordnungen von Photo- und Leuchtdioden. In Figur 3.1 ist eine Basiszelle 27 der erfindungsgemäßen Vorrichtung dargestellt.

Eine Basiszelle 27 enthält eine Photodiode 28 und eine Leuchtdiode 29, die nebeneinander angeordnet sind. Die Photodiode 28 und die Leuchtdiode 29 können gegeneinander optisch isoliert sein, um eine gegenseitige Beeinflussung zu vermeiden. Die Leuchtdiode 29 leuchtet auf, wenn die Photodiode 28 Laserstrahlung detektiert hat.

In einer bevorzugten Ausführungsform der vorliegenden Erfindung sind die Photodioden 1, 2, 28 und die Leuchtdioden 13, 14, 29 auf einer Linie oder eine Fläche angeordnet. In Figur 3.2 sind die Basiszellen 27 auf einer geraden Linie 30, in Figur 3.3 auf einer Fläche 31 angeordnet. Beispielsweise können die Basiszellen 27 auf einer geraden Linie 30 mit einer Länge von 100 mm oder auf einer quadratischen Fläche 31 von 100 mm x 100 mm angeordnet sein. Denkbar wäre auch eine abwechselnde Anordnung von Photodioden 28 und Leuchtdioden 29 auf einer Linie oder ihrer Anordnung auf einer nicht viereckigen (z.B. runden) Fläche, je nachdem welche Anordnung am günstigsten für die jeweilige Anwendung der erfindungsgemäßen Vorrichtung ist.

### Bezugszeichenliste

- 1: erste Photodiode
- 2: N-te Photodiode
- 3: einfallendes Licht
- 4: einfallendes Licht
- 5: erster Strom-Spannungswandler
- 6: N-ter Strom-Spannungswandler
- 7: erster Komparator
- 8: N-ter Komparator
- 9: erste Kippschaltung
- 10: N-te Kippschaltung
- 11: erste Schnittstelle
- 12: N-te Schnittstelle
- 13: erste Leuchtdiode
- 14: N-te Leuchtdiode
- 15: emittiertes Licht
- 16: emittiertes Licht
- 17: Leitung für das Rücksetzsignal
- 18: Multiplexanordnung
- 19: Signalleitung
- 20: erster Schalter
- 21: N-ter Schalter
- 22: Kontrolleinheit
- 23: erstes UND-Gatter
- 24: N-tes UND-Gatter
- 25: erster Eingang eines UND-Gatters
- 26: zweiter Eingang eines UND-Gatters
- 27: Basiszelle
- 28: Photodiode
- 29: Leuchtdiode
- 30: Linie
- 31: Fläche

## Patentansprüche

1. Verfahren zum Sichtbarmachen einer Laserstrahlposition, insbesondere bei hellem Umgebungslicht mit folgenden Schritten:
A) Detektieren des Laserstrahls mit Photodioden (1, 2, 28),
B) Konvertieren des Wechselstrom-Anteils der Photodioden (1, 2, 28) in Spannungen,
C) Unterdrücken von Untergrund durch Kompäratoren (7, 8),
D) Speichern der durch den Laserstrahl erzeugten Signalpositionen in Speicherelementen,
E) Anzeigen der in den Speicherelementen gespeicherten Signalpositionen durch Leuchtdioden (13, 14, 29),
F) Nullsetzen der Speicherelemente und
G) Wiederholen der Verfahrensschritte ab Schritt A).

2. Verfahren gemäß Anspruch 1, **dadurch gekennzeichnet, daß** je eine Leuchtdiode (13, 14, 29) einer Photodiode (1, 2, 28) zugeordnet ist.

3. Verfahren gemäß Anspruch 2, **dadurch gekennzeichnet, daß** sich die jeweils einer Photodiode (28) zugeordnete Leuchtdiode (29) direkt neben der Photodiode (28) befindet.

4. Verfahren gemäß Anspruch 3, **dadurch gekennzeichnet, daß** die Leuchtdioden (29) und die Photodioden (28) voneinander optisch isoliert sind.

5. Verfahren gemäß Anspruch 1, **dadurch gekennzeichnet, daß** die Photodioden (28) und die Leuchtdioden (29) auf einer Linie oder einer Fläche angeordnet sind.

6. Verfahren gemäß Anspruch 1, **dadurch gekennzeichnet, daß** das Konvertieren des Stroms der Photodioden (1, 2) in Spannungen mittels je eines Strom-Spannungswandlers (5, 6) erfolgt, der je einer Photodiode (1, 2) zugeordnet ist.

7. Verfahren gemäß Anspruch 1, **dadurch gekennzeichnet, daß** das Konvertieren des Wechselstrom-Anteils der Photodioden (1, 2) in Spannungen mittels eines Strom-Spannungswandlers (5, 6) erfolgt, nachdem ein Multiplexverfahren durchgeführt wurde.

8. Verfahren gemäß Anspruch 7, **dadurch gekennzeichnet, daß** ein Komparator (7) allen Photodioden (1, 2) zugeordnet ist.

9. Verfahren gemäß Anspruch 1, **dadurch gekennzeichnet, daß** je ein Komparator (7, 8) einer Photodiode (1, 2) zugeordnet ist.

10. Verfahren gemäß Anspruch 1, **dadurch gekennzeichnet, daß** die Speicherelemente Kippschaltungen (9, 10) sind.

11. Verfahren gemäß Anspruch 1, **dadurch gekennzeichnet, daß** es sich bei dem Laserstrahl um sichtbares Licht oder um Infrarotstrahlung handelt.

12. Vorrichtung zum Sichtbarmachen einer Laserstrahlposition, insbesondere bei hellem Umgebungslicht, mit einem Detektor zum Detektieren von Laserstrahlen und einem Anzeigeelement zum Sichtbarmachen der Laserstrahlposition, **dadurch gekennzeichnet, daß** der Detektor Photodioden (1, 2) umfaßt, deren Wechselstrom-Anteil durch Strom-Spannungswandler (5, 6) in Spannungen konvertiert werden und Komparatoren (7, 8) Untergrundsignale unterdrücken und Speicherelemente die Lasersignale speichern und das Anzeigeelement Leuchtdioden (13, 14) zum Anzeigen der Positionen der in den Speicherelementen gespeicherten Signale umfaßt.

13. Vorrichtung gemäß Anspruch 12, **dadurch gekennzeichnet, daß** die Photodioden (28) und die Leuchtdioden (29) auf einer Linie (30) oder einer Fläche (31) angeordnet sind.

14. Vorrichtung gemäß Anspruch 12, **dadurch gekennzeichnet, daß** je ein Strom-Spannungswandler (5, 6) einer Photodiode (1, 2) zugeordnet ist.

15. Vorrichtung gemäß Anspruch 12, **dadurch gekennzeichnet, daß** die Vorrichtung eine Multiplexanordnung (18) umfaßt, die den Photodioden (1, 2) nachgeordnet ist.

16. Vorrichtung gemäß Anspruch 12, **dadurch gekennzeichnet, daß** je ein Komparator (7, 8) einer Photodiode (1, 2) und einem Strom-Spannungswandler (5, 6) zugeordnet ist.

17. Vorrichtung gemäß Anspruch 12, **dadurch gekennzeichnet, daß** die Speicherelemente Kippschaltungen (9, 10) sind.

18. Vorrichtung gemäß Anspruch 12, **dadurch gekennzeichnet, daß** je eine Leuchtdiode (29) einer Photodiode (28) zugeordnet ist.

19. Vorrichtung gemäß Anspruch 18, **dadurch gekennzeichnet, daß** sich die jeweils einer Photodiode (28) zugeordnete Leuchtdiode (29) direkt neben der Photodiode (28) befindet.

20. Vorrichtung gemäß Anspruch 19, **dadurch gekennzeichnet, daß** die Leuchtdiode (29) und die Photodiode (28) voneinander optisch isoliert sind.

21. Verwendung einer Vorrichtung gemäß einem der Ansprüche 12 bis 20, **dadurch gekennzeichnet, daß** sie zum Sichtbarmachen des Laserstrahls eines Baulasers dient.

22. Verwendung gemäß Anspruch 21, **dadurch gekennzeichnet, daß** die Vorrichtung Bestandteil eines Markierwerkzeugs ist.

23. Verwendung gemäß Anspruch 22, **dadurch gekennzeichnet, daß** die Vorrichtung den Schreibkopf eines Markierwerkzeugs ansteuert, so daß genau an der Laserstrahlposition eine Markierung auf einer unter dem Schreibkopf befindlichen Fläche angebracht wird.
